(19) Europäisches Patentamt / European Patent Office / Office européen des brevets

(11) **EP 1 761 069 A1**

(12) **EUROPEAN PATENT APPLICATION**

(43) Date of publication:
**07.03.2007 Bulletin 2007/10**

(51) Int Cl.:
*H04N 7/50* (2006.01)   *H04N 7/26* (2006.01)

(21) Application number: **05300709.2**

(22) Date of filing: **01.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Thomson Licensing**
**92100 Boulogne-Billancourt (FR)**

(72) Inventors:
 • **Chen, Zhi Bo**
 **100085, Beijing (CN)**

 • **Chen, Qu Qing**
 **100085, Beijing (CN)**
 • **Zhu, Li Hua**
 **100085, Beijing (CN)**

(74) Representative: **Hartnack, Wolfgang**
**Deutsche Thomson-Brandt GmbH**
**European Patent Operations**
**Karl-Wiechert-Allee 74**
**30625 Hannover (DE)**

(54) **Method and apparatus for encoding video data using block skip mode**

(57) A common mode in video encoding skips the encoding and transmission of macroblocks that can be fully predicted. It requires however complex calculations to determine such blocks. A fast algorithm is disclosed that speeds up the process of skip mode decision by reducing the computations for transform, thus using a simplified transform ($T_{simp}$), and reducing computations for quantization ($Q_{low}$). The disclosed method for detecting Skip mode checks only few low frequency coefficients, without performing a full transform, and offsets for Luma and Chroma part are adaptively chosen to modify quantization parameters in detecting Skip mode, which can achieve a good trade-off in keeping both subjective and objective quality.

Fig.4

**Description**

Field of the invention

This invention relates to a method and an apparatus for encoding video data, whereby Skip mode is used.

Background

The H.264 video coding standard, also known as MPEG-4 Part 10 or AVC, uses for motion compensation (MC) residual images, which are generated on macroblock (MB) level by calculating differences between images. For each residual MB, one of several different encoding modes is selected in a mode decision process, and the MB is transformed, quantized and coded according to the selected coding process. Previous standards, e.g. H.263, are based on the 8x8 Discrete Cosine Transform (DCT). H.264 however uses a 4x4 integer transform, combined with quantization, to deal with residual blocks.

If in inter-frame coding many 16x16 MBs remain unchanged and therefore the residual MB is empty, so that no motion and residual information needs to be encoded, the so-called Skip mode can be used. As no motion search is required and this mode has the lowest complexity, various fast mode decision algorithms differentiate Skip mode from other block encoding types and give it the highest priority, for first decision. Moreover, Skip mode is found to take many (often more than 50%) of the MBs, especially for sequences with large background or for low bit rate coding. Thus, various known algorithms check the Skip mode conditions first. When the conditions are satisfied, then Skip mode is selected as encoding mode for the current MB.

The Skip mode decision at an early stage makes it possible to omit for these MBs all the remaining rate distortion (RD) calculations, the MC and intra predictions. It is therefore desirable to get a fast Skip mode decision that requires a minimum of calculation effort while providing a good hit ratio. Skip mode is usually detected by calculating the RD cost of a 16x16 block and then detecting that: (i) reference frame is just one previous frame, (ii) motion vector is (0,0) or equal to the Predicted Motion Vector (PMV), and (iii) the transform coefficients are all quantized to zero.

For the following quantization step, H.264 allows for each MB to use one of several different quantizers, which is selected by a quantization parameter (QP).

Summary of the Invention

The described conventional process for detecting if Skip mode should be used requires for each MB 64 additions and 16 shift operations, plus 16 multiplications for quantization. It is desirable to reduce the amount of calculations, and thus processing power.

It has been recognized by the inventors that the energy of the transformed coefficients mainly focuses on the lower frequency coefficients. Therefore a fast Skip mode decision algorithm is proposed that is based on the mentioned fact.

The gist of the invention is to speed up the Skip mode decision by decreasing the computational effort required for the transform.

Specifically, based on the fact that quantized coefficients mainly focus on the lower frequency domain, the invention enables the decision for Skip mode by only checking few low frequency coefficients, without full transform. Further, offsets for Luma and Chroma part are adaptively chosen to modify quantization parameters in detecting Skip mode, which can achieve a good trade-off in keeping both subjective and objective quality.

According to one aspect of the invention, zero-blocks (blocks with all coefficients quantized to zero) can be judged by checking only the lowest few coefficients. Compared with conventional processing, the effect of this aspect of the invention on the data stream is that some few blocks use Skip mode that would conventionally not use it. These are blocks whose checked coefficients are zero, but higher coefficients are not.

According to another aspect of the invention, a simplified transform can be used to decrease the complexity of the required calculations. The effect that this aspect has on the data stream, compared with conventional processing, is that some few blocks use Skip mode that would conventionally not use it, or vice versa. These are blocks for which the simplified and the conventional transform give different results after scaling and quantization, with one of the results being zero and the other not. The probability for this to happen depends a.o. on the number of considered coefficients.

According to yet another aspect of the invention, offsets can be adaptively chosen to decrease the quantization step width when detecting Skip mode. Thus, a good trade-off in keeping both subjective and objective quality can be achieved. The effect that this aspect has on the data stream, compared with conventional processing, is that the quantization step widths that are transmitted are relative to an offset, and that also the offset is transmitted. The encoder can determine the offset, store it and add the offset to the quantization step width before quantization (separately for luma and chroma).

According to the invention, a method for encoding video data on block level comprises the steps of selecting a block,
subtracting a respective predicted block, wherein a residual block is generated,
transforming the pixels of the residual block into coefficients, wherein only the DC coefficient and some of the AC coefficients are calculated, while the other AC coefficients are neglected or skipped,
scaling and quantizing the coefficients of the transformed residual block,
detecting that the scaled and quantized coefficients are zero, so that a transmission of data for the selected block can be skipped, and
upon said detecting, encoding for transmission a notification indicating that for the selected block no image data are transmitted. If the scaled and quantized coefficients are not zero, another encoding mode is selected for the MB, and a more complex encoding procedure starts.

In one embodiment of the invention, the method can be further specified in that the step of transforming the pixels of the residual block into coefficients comprises calculating a defined number of the lowest coefficients, including the DC coefficient, while neglecting higher AC coefficients, wherein said calculating approximates an integer transform.

In one embodiment of the invention, the method can be further specified in that the step of transforming the pixels of the residual block into coefficients comprises calculating parameters from only some defined pixels of a block, and the step of scaling and quantizing is performed for each of said parameters by a single multiplication operation.

In one embodiment of the invention, the method can be further specified in that the step of transforming the pixels of the residual block into coefficients comprises calculating four parameters from four center and four corner pixels of a block (a simple cross sample). This is done for both luminance and chrominance blocks.

In one embodiment of the invention, the method is specified further in that the lowest three coefficients are calculated according to the formulas:

$$F(0,0) = k_{dc}(LU + LD + RU + RD)$$

$$F(0,1) = k_{ac}((LU - RD) + (LD - RU))$$

$$F(1,0) = k_{ac}((LU - RD) - (LD - RU))$$

with $LU = R_{00} + R_{11}$, $LD = R_{21} + R_{30}$, $RU = R_{12} + R_{03}$, $RD = R_{22} + R_{33}$, wherein $R_{00}, R_{21}, R_{12}$ and $R_{22}$ are centre pixels and the others are corner pixels of a 4x4 MB, $k_{ac}, k_{dc}$ are scaling parameters and LU,LD,RU and RD are intermediate parameters.

In one embodiment of the invention, the method can be further specified in that for the quantizing quantization step sizes and respective offsets are defined separately for the luma and chroma components, and wherein step sizes for the block quantization are selected.

In one embodiment of the invention, the method can be further specified in that said selecting a block is based on deciding 16x16 Inter mode for the block.

Advantageous embodiments of the invention are disclosed in the dependent claims, the following description and the figures.

Brief description of the drawings

Exemplary embodiments of the invention are described with reference to the accompanying drawings, which show in

Fig.1 the probability of three-coefficients MBs in different bit rates;

Fig.2 the precise probability of estimating zero blocks by their lowest $n$ (n=3,4,5,6) coefficients;

Fig.3 a conventional framework for Skip mode decision;

Fig.4 the framework for Skip mode decision according to the invention; and

Fig.5 a pattern of input samples for a simplified transform.

Detailed description of the invention

For inter-frame coding modes, Skip mode refers to the 16x16 mode where no motion and residual information is encoded. Therefore Skip mode has lower complexity than other modes, and many fast mode decision algorithms differentiate Skip mode from other block types and give it the highest priority for decision at first, so as to save further calculations that may be unnecessary.

According to the present invention, an efficient method for determining Skip mode is based on the fact that quantized coefficients mainly focus on the lower frequency domain.

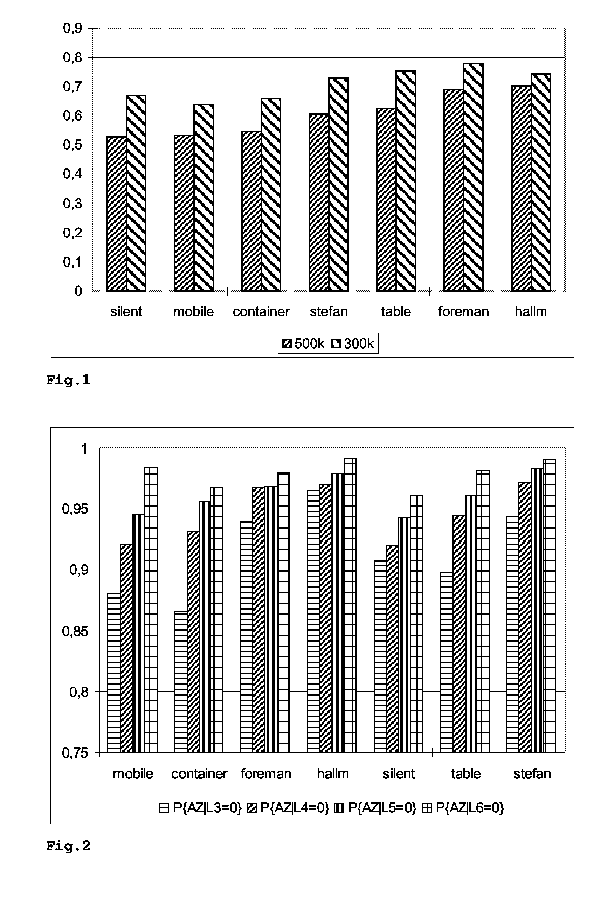

Fig.1 shows the probability for the occurrence of three-coefficient blocks, i.e. blocks with all non-zero quantized coefficients located only in the lower three positions that are commonly designated as F(0,0), F(0,1) and F(1,0), separately for bit rates of 500kb/s and 300kb/s. Seven CIF format sequences are tested (S1,...,S7). It can be seen that the probability for a three-coefficient block is relatively high, i.e. quantized coefficients mainly focus on the lower frequency domain, while only few blocks have other non-zero entries, especially in the lower bit rate case.

By further experimental results, it can be concluded that a zero-block, i.e. a block with all coefficients quantized to zero, can be predicted with high probability by only detecting some of its lowest coefficients. Exemplarily, it is sufficient to detect only n (n = 3,4,5,6) coefficients.

Fig.2 shows the probability P{AZ|L$n$=0} of correctly estimating zero-blocks by only detecting their lowest n coefficients (n = 3,4,5,6). It can be seen that all these probabilities are over 86% and reach more than 95% in most cases. E.g. for the first sequence S'1, the probability that a MB whose first three quantized coefficients are zero is a zero-block is around 88 percent. If its first four quantized coefficients are zero, the probability is around 92 percent.

Therefore it is possible to judge a zero-block quite securely by only examining the lowest n (n = 3,4,5,6) quantized coefficients.

The effect of the simplified transformation for MBs that are wrongly classified (i.e. the lowest n quantized coefficients are zero but the block is not a zero-block) is only that these blocks are encoded in a sub-optimal way. Thus, slightly higher bit-rate may be the cost of a significant processing power reduction.

Another aspect of the present invention is that different fast and simplified algorithms can be used to estimate the lowest n coefficients.

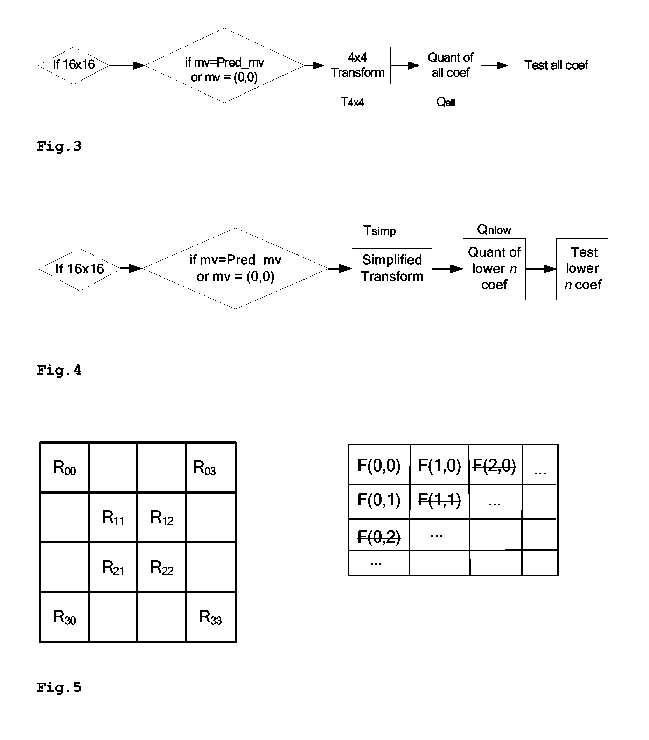

As Fig.3 illuminates, the conventional framework used for Skip mode decision performs the whole 4x4 transform T4x4 and quantization process Qall on all coefficients of 16x16 pixel MBs whose MV needs not be transmitted, and then checks if all quantized coefficients are zero.

As shown in Fig.4, the proposed framework according to the invention uses a simplified transform Tsimp to get the lowest n coefficients, quantizes only these coefficients Qlow, and determines zero-blocks by detecting if the lowest n quantized coefficients are zero.

E.g. in the case of n=3, the method defined in the European patent application EP05291125 (PA050017) can be used as the simplified transform. Also other simplified transforms can be used for deriving the lower frequency coefficients.

A pattern of a 4x4 input sample for a simplified transform is shown in Fig.5. Four parameters (LU,LD,RU,RD) are estimated based on only 8 pixels (4 center and 4 corner pixels), instead of all pixels values, being 16 in this case. Using $LU=R_{00}+R_{11}$, $LD=R_{21}+R_{30}$, $RU=R_{12}+R_{03}$, $RD=R_{22}+R_{33}$, the above-mentioned first three coefficients calculate as:

$$F(0,0) = k_{dc}(LU + LD + RU + RD)$$
$$F(0,1) = k_{ac}((LU - RD) + (LD - RU))$$
$$F(1,0) = k_{ac}((LU - RD) - (LD - RU))$$

$$(1)$$

A calibration is done by putting the scaling factors $k_{dc}$,$k_{ac}$ and the results should match that of the 4x4 DCT or integer transform used in H.264 for certain important block patterns.

Advantageously, the three-coefficient transform requires 13 additions and 3 multiplications only (counting subtractions also as addition operations), while conventional integer 4x4 transform in H.264 needs 64 additions and 16 shifts. If quantization is considered, the conventional transform requires another 16 multiplications. However, according to the invention the multiplication in the three-coefficient transform can also be combined into the quantization and hence only 3 multiplications are needed.

A higher probability and thus precision can be obtained by using more coefficients (n = 4,5,6, etc.) for checking, taking into account a computation load increase. General methods for deducing the lowest n (n>3) coefficients can be used accordingly. Usually sufficient accuracy is obtained for 5 or 6 coefficients, instead of the conventional 16 in H.264.

A further method for keeping quality is to decrease the quantization step with an offset when estimating if a block is a zero-block. Specifically, for predicting a zero-block, the lowest n coefficients derived from a simplified transform can be quantized by quantization steps $Q_{step}$, and then a zero-block is assumed if all the n quantized coefficients are zero. Here we choose two offset values $Off_{Lum}$ and $Off_{Chr}$ respectively for luma and chroma blocks, and use $Q_{step}$ - $Off_{Lum}$ or $Q_{step}$ - $Off_{chr}$ to quantize coefficients of luma or chroma parts. This method can also be used to remove some subjective artefacts caused by the Skip mode.

In order to decrease the quantization steps, the QP value is decreased by an offset value (e.g. 3, can be obtained from experiments). Further, different offsets can be used for luma and chroma parts, due to their different properties.

The present invention describes a fast algorithm to speed up the Skip mode decision process by decreasing computations for transforms and reducing computations for quantization, inverse quantization, entropy coding and reconstruction. Specifically, the invention enables detecting Skip mode by only checking few low frequency coefficients, without full transform. Offsets to modify quantization parameters may be chosen adaptively for the luma and chroma parts.

Moreover, the following advantages are provided by the proposed fast Skip mode decision algorithm.

Exploiting the fact that quantized coefficients mainly focus on the lower frequency domain, the Skip mode decision process is accelerated by only checking the lowest few coefficients, with a simplified transform to derive them. Further, also an offset can be used to decrease the quantization step for keeping both subjective and objective quality.

The complexity of Skip mode decision is decreased by reducing the computational effort for the transform. Further, an offset in quantization can be used adaptively in keeping both subjective and objective quality.

The proposed method for deciding Skip mode is more accurate than methods based e.g. SAD/Q with SAD being the sum-of-absolute-differences and Q the quantization step width. Further, the proposed method increases accuracy by evaluating both luminance and chrominance components of the video signal.

Moreover, the proposed modification of quantization step width can compensate inaccuracies of the simplified transform, and also solve the problem of subject quality degradation caused by using Skip mode.

The general idea of the invention is applicable to all devices for video optimization with rate-distortion estimation, scalable video coding (base-layer video coding) and video transmission.

## Claims

1. A method for encoding video data on block level, wherein prediction is used, comprising the steps of

   - selecting a block;
   - subtracting a respective predicted block, wherein a residual block is generated;
   - transforming ($T_{simp}$) the pixels of the residual block into coefficients, wherein only the DC coefficient and some of the AC coefficients are calculated while the others are skipped;
   - scaling and quantizing ($Q_{low}$) the coefficients of the transformed residual block;
   - detecting ($D0_{low}$) that the scaled and quantized coefficients are zero; and
   - upon said detecting, encoding a notification indicating that for the selected block no data are transmitted.

2. Method according to claim 1, wherein the step of transforming ($T_{simp}$) the pixels of the residual block into coefficients comprises calculating a defined number (n) of the lowest coefficients, including the DC coefficient, while neglecting higher AC coefficients, wherein said calculating is an approximation for an integer transform.

3. Method according to claim 1, wherein the step of transforming ($T_{simp}$) the pixels of the residual block into coefficients comprises calculating parameters from only some defined pixels of a block, and the step of scaling and quantizing is performed for each of said parameters by a single multiplication operation.

4. Method according to any of the claims 1-3, wherein the step of transforming ($T_{simp}$) the pixels of the residual block into coefficients comprises calculating four parameters from four center and four corner pixels of a block.

5. Method according to the preceding claim, wherein the lowest three coefficients are calculated according to the formula:

$$F(0,0) = k_{dc} ( LU + LD + RU + RD )$$

$$F(0,1) = k_{ac} ((LU - RD) + (LD - RU))$$

$$F(1,0) = k_{ac} ((LU - RD) - (LD - RU))$$

with $LU=R_{00}+R_{11}$, $LD=R_{21}+R_{30}$, $RU=R_{12}+R_{03}$, $RD=R_{22}+R_{33}$.

6. Method according to any of the preceding claims, wherein for the quantizing quantization step sizes and respective offsets are defined separately for the luma and chroma components, and wherein step sizes for the block quantization are selected and the difference between the selected quantization step sizes and their respective offset is calculated and transmitted.

7. Method according to any of the preceding claims, wherein said selecting a block is based on deciding 16x16 Inter mode for the block.

8. Method for decoding video data encoded according to any of the claims 1-7.

9. Apparatus for encoding video data on block level, wherein prediction is used, comprising

   - means for selecting a block;
   - means for subtracting a respective predicted block, wherein a residual block is generated;
   - means for transforming ($T_{simp}$) the pixels of the residual block into coefficients, wherein only the DC coefficient and some of the AC coefficients are calculated while the others are skipped;
   - means for scaling and quantizing ($Q_{low}$) the coefficients of the transformed residual block;
   - means for detecting ($D0_{low}$) that the scaled and quantized coefficients are zero; and
   - means for encoding, upon said detecting, a notification indicating that for the selected block no data are transmitted.

**Fig.1**

**Fig.2**

```
┌─────────┐     ┌──────────────────┐     ┌──────────┐     ┌──────────┐     ┌──────────────┐
│ If 16x16│ ──► │  if mv=Pred_mv   │ ──► │   4x4    │ ──► │ Quant of │ ──► │ Test all coef│
└─────────┘     │   or mv = (0,0)  │     │Transform │     │ all coef │     └──────────────┘
                └──────────────────┘     └──────────┘     └──────────┘
                                            $T_{4x4}$        $Q_{all}$
```

**Fig.3**

```
                                                    $T_{simp}$           $Q_{nlow}$
┌─────────┐     ┌──────────────────┐     ┌──────────┐     ┌──────────┐     ┌──────────┐
│ If 16x16│ ──► │  if mv=Pred_mv   │ ──► │Simplified│ ──► │ Quant of │ ──► │   Test   │
└─────────┘     │   or mv = (0,0)  │     │Transform │     │ lower n  │     │  lower   │
                └──────────────────┘     └──────────┘     │   coef   │     │  n coef  │
                                                          └──────────┘     └──────────┘
```

**Fig.4**

| $R_{00}$ |          |          | $R_{03}$ |
|----------|----------|----------|----------|
|          | $R_{11}$ | $R_{12}$ |          |
|          | $R_{21}$ | $R_{22}$ |          |
| $R_{30}$ |          |          | $R_{33}$ |

| $F(0,0)$ | $F(1,0)$ | ~~$F(2,0)$~~ | ... |
|----------|----------|--------------|-----|
| $F(0,1)$ | ~~$F(1,1)$~~ | ...      |     |
| ~~$F(0,2)$~~ | ...  |              |     |
| ...      |          |              |     |

**Fig.5**

**European Patent Office**

## EUROPEAN SEARCH REPORT

Application Number

EP 05 30 0709

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 719 961 A (NORMILE ET AL) 17 February 1998 (1998-02-17) | 1,2,7-9 | H04N7/50 H04N7/26 |
| A | | 3-6 | |
| X | RSV P ET AL: "EFFICIENT IMPLEMENTATION OF MPEG-4 VIDEO ENCODER ON RISC CORE" IEEE TRANSACTIONS ON CONSUMER ELECTRONICS, IEEE INC. NEW YORK, US, vol. 49, no. 1, February 2003 (2003-02), pages 204-209, XP001157992 ISSN: 0098-3063 | 1,2,7-9 | |
| A | * page 206, paragraph 4.1.2 - page 207 * | 3-6 | |
| X | EP 1 349 395 A (SEIKO EPSON CORPORATION) 1 October 2003 (2003-10-01) | 1,2,7-9 | |
| A | * abstract * | 3-6 | |
| X | US 2005/047504 A1 (SUNG CHIH-TA STAR ET AL) 3 March 2005 (2005-03-03) | 1,2,7-9 | |
| A | * abstract * * paragraph [0058] * * paragraph [0062] - paragraph [0063]; figures 4,10 * | 3-6 | |
| A | EDITOR: T. WIEGAND: "ISO/IEC JTC1/SC29/WG11 CODING OF MOVING PICTURES AND AUDIO - Text of Committee Draft of Joint Video Specification (ITU-T Rec. H.264 ¦ ISO/IEC 14496-10 AVC) JVT-C167" ISO - INTERNATIONAL ORGANISATION FOR STANDARDISATION, May 2002 (2002-05), page 5, XP002365203 Fairfax, VA, USA * page 5, paragraph 3.107 * | 1-9 | |

TECHNICAL FIELDS SEARCHED (IPC)

H04N

The present search report has been drawn up for all claims

| Place of search | Date of completion of the search | Examiner |
|---|---|---|
| The Hague | 31 January 2006 | Foglia, P |

## ANNEX TO THE EUROPEAN SEARCH REPORT
## ON EUROPEAN PATENT APPLICATION NO.

EP 05 30 0709

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2006

| Patent document cited in search report | | Publication date | Patent family member(s) | | Publication date |
|---|---|---|---|---|---|
| US 5719961 | A | 17-02-1998 | NONE | | |
| EP 1349395 | A | 01-10-2003 | CN | 1449198 A | 15-10-2003 |
| | | | JP | 2004007360 A | 08-01-2004 |
| | | | TW | 221390 B | 21-09-2004 |
| | | | US | 2003185300 A1 | 02-10-2003 |
| US 2005047504 | A1 | 03-03-2005 | NONE | | |

EPO FORM P0459

For more details about this annex : see Official Journal of the European Patent Office, No. 12/82

**EP 1 761 069 A1**

## REFERENCES CITED IN THE DESCRIPTION

### Patent documents cited in the description

- EP 05291125 A